# EUROPÄISCHE PATENTSCHRIFT

(11) **EP 0 528 347 B1**
(45) Veröffentlichungstag und Bekanntmachung des Hinweises auf die Patenterteilung: **16.03.1994**
(21) Anmeldenummer: 92113734.5
(22) Anmeldetag: 12.08.1992
(51) Int. Cl.: H02K 21/14, B62J 6/12, H02K 3/47

(54) **Radnabendynamo**
Wheel-hub dynamo
Dynamo de moyeu de roue

(30) Priorität: 20.08.1991 CH 2443/91
(43) Veröffentlichungstag der Anmeldung: 24.02.1993
(73) Patentinhaber: Vereinigte Drahtwerke AG, CH-2501 Biel (CH)
(72) Erfinder: Schwaller, Edwin, CH-2501 Biel (CH)
(74) Vertreter: Lemcke, Rupert, Dipl.-Ing.

(56) Entgegenhaltungen:
- EP-A- 0 225 132
- EP-A- 0 425 260
- CH-A- 228 802
- CH-A- 263 173
- DE-A- 2 532 574
- DE-A- 2 743 837
- DE-C- 839 059
- FR-A- 2 236 301
- US-A- 4 645 961

## Beschreibung

Die Erfindung betrifft einen Radnabendynamo gemäss dem Oberbegriff des ersten Patentanspruchs.

Für die Stromversorgung von Fahrradbeleuchtungen sind Dynamos unterschiedlicher Bauart bekannt, wobei der Antrieb meist über ein am Reifen anliegendes Reibrad oder dergleichen erfolgt. Solche Dynamos besitzen in der Regel einen geringen Wirkungsgrad, so dass die erzeugte elektrische Leistung in einem schlechten Verhältnis zum Antriebswiderstand steht.

Ein anderer Weg wird bei Radnabendynamos beschritten, bei welchen der Dynamo in der Radnabe untergebracht und über diese angetrieben ist. Hier steht nur ein sehr beschränktes Bauvolumen zur Verfügung, was diese Bauweise bisher relativ teuer und aufwendig erscheinen liess, so dass entsprechende Konstruktionen einen bloss relativ schlechten Wirkungsgrad erreichten.

In US-4,645,961 wird ein Dynamo beschrieben, welcher als Spule eine gedruckte Schaltung aufweist. Diese gedruckte Schaltung trägt spiralförmige Leiterbahnen und benötigt mehrere Durchkontaktierungen. Die Durchkontaktierungen führen zu unerwünschten Verdickungen und sind aufwendig in der Herstellung.

Es stellt sich auf diesem Hintergrund die Aufgabe, einen Radnabendynamo der eingangs genannten Art so auszugestalten, dass er eine kompakte Bauweise mit einem guten Wirkungsgrad verbindet, ohne dass die Herstellung besonders aufwendig wird, und die sich so insbesondere für den Einbau in einen Radnabendynamo eignet.

Die Lösung dieser Aufgabe ergibt sich durch die in den Patentansprüchen genannten Merkmale.

Durch die sternförmige Anordnung von achsial ausgerichteten Permanentmagnetstäben kann bei kleinem Magnetvolumen und kleinem Bauvolumen ein homogenes Magnetfeld erzeugt werden, das mit geringen Magnetverlusten arbeitet. Die Spulenanordnung erlaubt es, auf Schleifkontakte zu verzichten, so dass keine entsprechenden Spannungsverluste auftreten.

Weitere Eigenschaften und Vorteile der erfindungsgemässen Konstruktion ergeben sich aus der Beschreibung eines Radnabendynamos als Ausführungsbeispiel. In den Figuren zeigen:
Figur 1 eine Schnittansicht des Radnabendynamos entlang der Radachse;
Figur 2 eine Schnittansicht entlang der Linie II - II in Figur 1.
Figur 3 eine schematische Darstellung der Spulenanordnung und der Magnetanordnung mit 8 Stabmagneten in Abwicklung;
Figur 4 ein der Figur 3 entsprechendes Spannungszeit-Diagramm, und
Figur 5 eine schematische Schnittdarstellung durch eine Folie mit gedruckten Leitern der Spulenanordnung.

Der Radnabendynamo im vorliegenden Ausführungsbeispiel sitzt auf einer Radachse 1, die in bekannter Weise an der Gabel 2, 2' eines Fahrrades befestigt ist. Ein Nabenkörper 3, an welchem die Radspeichen befestigt sind, ist mittels Lagern 4 drehbar auf der Radachse 1 gelagert. Innerhalb des Nabenkörpers 3 und durch diesen gegen aussen geschützt, ist auf der Radachse eine hülsenförmig gewickelte, stillstehende Spulenanordnung 5 vorgesehen, welche in einen stabilen Rückschlussring 6 aus Metall eingeschoben ist. Dazwischen ist eine Isolationsfolie angeordnet, welche einen Kurzschluss der Spule 5 über den Rückschlussring 6 ausschliesst. Der Rückschlussring ist als Blechpaket aus axial aneinander gereihten Fe-Ringen aufgebaut. Die Fe-Ringe des Bleckpakets sind durch Isolationszwischenlagen, vorzugsweise durch Elektroschutzlackbeschichtung, voneinander getrennt und werden durch Stanzpaketierung zum Rückschlussring 6 vereinigt.

Der Aufbau des Rückschlussrings als Blechpaket setzt die Wirbelstromverluste merklich herab und trägt zum hohen Wirkungsgrad der Maschine bei. Die von benachbarten Polen ausgehenden Magnetfeldlinien verlaufen aussen durch diesen Rückschlussring. Neben seinen magnetischen Funktionen bewirkt der formstabile Rückschlussring eine exakte Zentrierung der Spule 6 und stellt ausserdem eine gute Wärmeabführung aus der Spule sicher. Der Luftspalt zwischen der Spule 6 und einem innerhalb der Spule angeordneten Magnetrotor 7 kann damit bei kleinen Toleranzen minimal gehalten werden. Die stehende Anordnung der Spule 6 erlaubt eine direkte elektrische Verbindung mit Anschlussleitungen 17, welche durch die Radachse 1 nach aussen geführt sind.

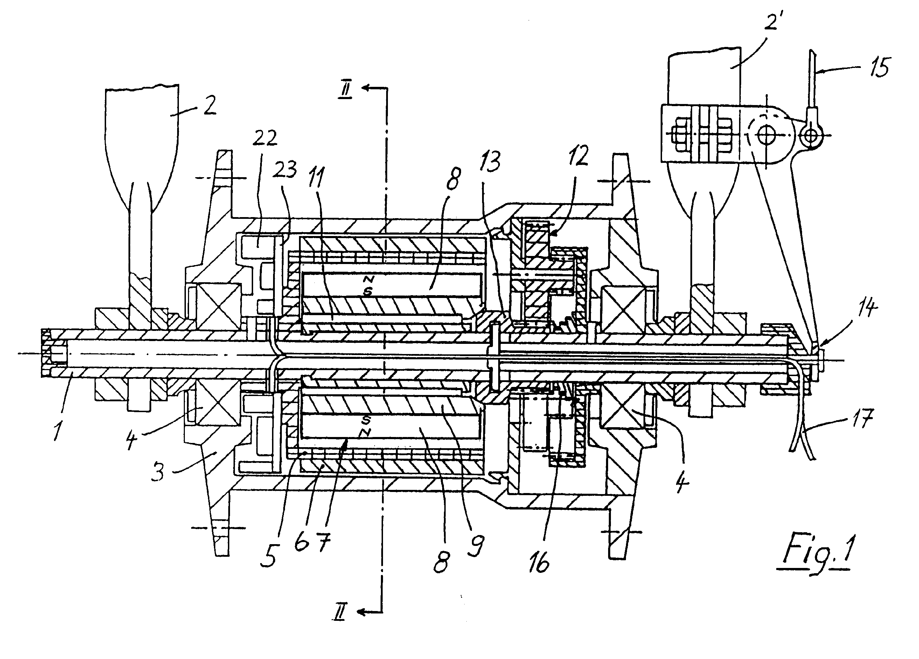

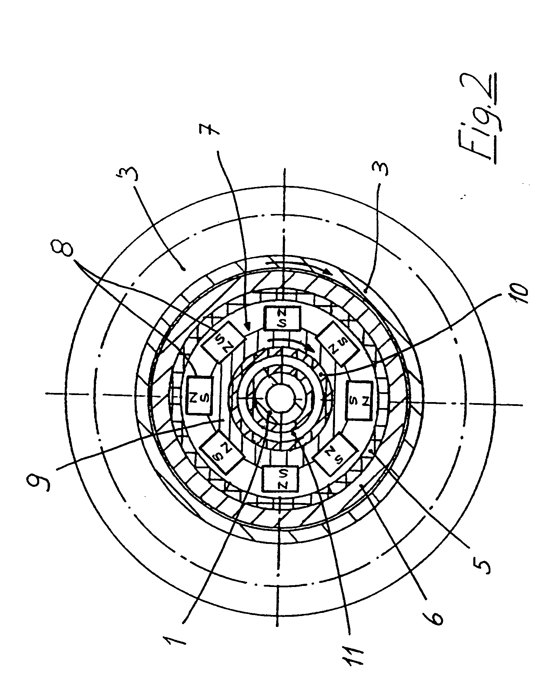

Der Magnetrotor 7, dessen Aufbau insbesondere durch Vergleich der Figuren 1 und 2 deutlich wird, besitzt mehrere, in diesem Ausführungsbeispiel acht, Stabmagnete 8, aus Material mit hoher magnetischer Dichte in der Grössenordnung von 200 KJ/m³, die achsial ausgerichtet und bezüglich der Achse sternförmig mit abwechselnd nach aussen weisenden Nord- und Südpolen angeordnet sind. Die Stabmagnete 8 sind dabei an einem Trägerteil 9 aus Eisen befestigt, über den der innere Magnetkreis zwischen den Nord- bzw. Südpolen der benachbarten Stabmagnete 8 geschlossen wird. Vorzugsweise sind die Magnete in achsiale Nuten am Tragerteil 9 eingeklebt.

Die sternförmige Anordnung der achsial ausgerichteten Stabmagneten 8 erfolgt so, dass die Permanentmagnetstäbe in Radialrichtung magnetisiert sind, so dass ihre inneren bzw. äusseren Enden abwechselnd Nord- und Südpole bilden. Die Anzahl der Magnete, d.h. die Polzahl, liegt vorzugsweise zwischen sechs und zehn. Diese Magnetanordnung führt zu einem homogenen Magnetfeld im Bereich der Spule mit geringen Magnetverlusten. Wie aus Fig. 2 ersichtlich ist, kann das Magnetvolumen klein gehalten werden, was sich kostensenkend auswirkt. Es tritt mit oder ohne Stromabgabe keine Polfühligkeit und im Leerlauf ein sehr geringer Drehwiderstand auf.

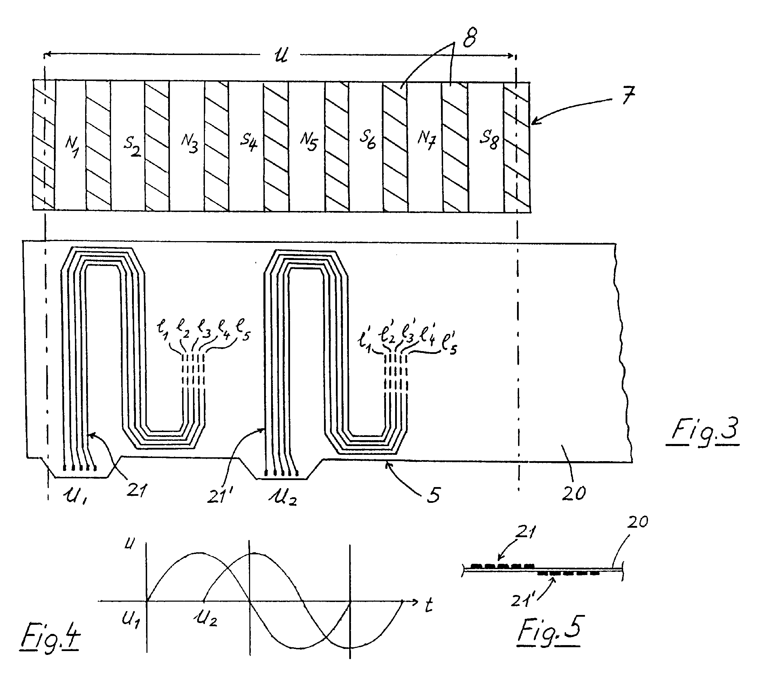

Aus Figur 3 ist die Spulenanordnung 5 in Abwicklung zusammen mit der ebenfalls abgewickelten Magnetanordnung 7 ersichtlich, welche man sich übereinander liegend und gemäss Figur 2 aufgewickelt vorzustellen hat. Die Spulenanordnung 5 weist eine gedruckte Leiterbahn 21 mit Leitern l₁ bis l₅ auf der Oberseite sowie gedruckte Leiterbahnen 21' mit Leitern l₁' bis l₅' auf der Unterseite einer Folie 20 auf, wie in Figur 5 ersichtlich. Die Leiterbahnen sind mäanderförmig so angeordnet, dass sie jeweils die Magnetfeldlinien, die etwa radial von den Permanentmagnetstäben 8 ausgehen senkrecht schneiden. Die vorder- bzw. rückseitig auf der Folie angeordneten Leiterbahnen sind so gegeneinander versetzt, dass die darin erzeugten Spannungen U₁ und U₂ um 90° phasenverschoben sind, wie aus Figur 4 ersichtlich ist. Nach der Gleichrichtung entsteht so durch Ueberlagerung eine Gleichspannung relativ geringer Welligkeit.

Die Leiterbahnen sind an ihren Enden so miteinander verbunden, dass die Leiter l₁ bis l₅ bzw. die Leiter l₁' bis l₅' in Serie liegen.

Bezeichnet man die Zahl der Leiter pro Leiterbahn mit n, die Polzahl mit Z und die Anzahl Wicklungen der Folie 20 mit W, so ergibt sich eine wirksame Windungszahl von n.Z.W für jede Leiterbahn 21 bzw. 21'. Ist z.B n = 5, Z = 8 und W = 10, so ist die Windungszahl 400. Wie leicht ersichtlich ist, kann die Windungszahl durch die Aenderung der erwähnten Grössen leicht beeinflusst werden.

Wie bereits eingangs erwähnt, wird die aufgewickelte Folie 20 im metallischen Rückschlussring 6 angeordnet, womit ihre koaxiale Form und Zentrierung sichergestellt ist.

Der Magnetrotor wird im Falle des Radnabendynamos über ein Getriebe 12 durch die Rad- bzw. Nabendrehung angetrieben. Als Getriebe wird, wie aus Fig. 1 ersichtlich, vorzugsweise ein Planetenradgetriebe verwendet, das seitlich dem Magnetrotor 7 angeordnet ist. Das Planetenradgetriebe 12 verbindet den Nabenkörper 3 mit einem auf der Radachse 1 sitzenden Kupplungsglied 13 und besitzt vorzugsweise einen Uebersetzungsfaktor von mehr als 10. Das sich auf der Radachse 1 drehende Kupplungsglied 13 wird durch eine Feder 16 in Reibverbindung mit dem Magnetrotor 7 gebracht und ist mittels einer von aussen durch die Radachse betätigbaren Zuschaltmechanik 14 über einen Kabelzug 15 auskuppelbar. Der Kabelzug 15 erlaubt eine Fernbedienung der Zu- bzw. Abschaltung des Radnabendynamos. Im abgeschalteten Zustand ist der Magnetrotor 7 vom Antrieb abgekuppelt und steht gegenüber der Spulenanordnung 5 still.

Im Falle des gezeigten Radnabendynamos sind innerhalb des Nabenkörpers 3 auf der stillstehenden Achse 1 elektrische Schaltelemente 22 auf einer Leiterplatte 23 angeordnet. Diese sind dafür vorgesehen, die Ausgangsspannung und den Ausgangsstrom so zu wandeln, bzw. zu begrenzen, dass sie den gesetzlichen Werten entsprechen, welche für Fahrraddynamos vorgesehen sind. Mittels einer Drosselspule wird die an sich fast lineare Geschwindigkeits-Spannungs-Kennlinie des Dynamos bei höheren Geschwindigkeiten abgeflacht. Eine Zenerdiode sorgt dafür, dass die zulässige Höchstspannung von 7 V nicht überschritten wird. Statt dessen kann auch eine entsprechende elektronische Ausgangsspannungsregelung vorgesehen sein, deren Schaltelemente auf der Leiterplatte 23 angeordnet sind. Der beschriebene Dynamo kann also anstelle eines herkömmlichen Dynamos mit konventionellen Fahrrad-Lichtanlagen eingesetzt werden, wenn auch mit merklich besserem Wirkungsgrad.

Der so aufgebaute Dynamo hat in angeschaltetem Zustand einen mechanischen Wirkungsgrad von etwa 0.7 und einen elektrischen Wirkungsgrad von etwa 0.8, was einen Gesamtwirkungsgrad von über 0.5 ergibt. Schon bei einer Fahrgeschwindigkeit eines Fahrrades von 5 km/h (d.h. bei Schrittempo) erzeugt er eine Spannung von 3.0 V bei 25 HZ, was eine vorschriftmässige Beleuchtung auch bei kleinen Geschwindigkeiten gestattet. Der beschriebene Dynamo eignet sich deshalb insbesondere für die Lichterzeugung an Fahrrädern. En kann zur Speisung einer Fahrradelek tronik dienen, welche auch eine Standlichtautomatik einschliesst.

Andere Anwendungen als Generator können in analoger Weise vorgesehen sein, wobei natürlich die Ansteuerung und der mechanische Aufbau im Rahmen der Erfindung der jeweiligen Anwendung anzupassen ist.

## Patentansprüche

1. Radnabendynamo in einem auf einer Radachse (1) drehbar gelagerten Nabenkörper (3) mit einer zentralen Permanentmagnetanordnung (7) und einer diese koaxial umgebenen Spulenanordnung (5, 6), welche relativ zueinander rotierbar sind, wobei die Permanentmagnetanordnung (7) eine Mehrzahl von axial ausgerichteten, sternförmig angeordneten Permanentmagnetstäben (8) aufweist und wobei die Spulenanordnung eine hülsenförmige Spule (5) besitzt, die als gedruckte Schaltung auf einer zu einer Hülse wickelbaren Trägerfolie ausgebildet und in eine Traghülse (6) aus magnetisierbarem Material eingeschoben ist, die als Rückschlussring wirkt, dadurch gekennzeichnet, dass die gedruckte Schaltung mehrere parallel verlaufende Leiterbahnen (2, 1; 2', 1') aufweist, die mäanderförmig mit einer der Permanentmagnetanordnung (7) entsprechenden Geometrie verlaufen, die sich im wesentlichen über die ganze Länge der Trägerfolie erstrecken, und die an ihren Enden derart miteinander verbunden sind, dass sie zueinander in Serie liegen.

2. Radnabendynamo nach Anspruch 1, dadurch gekennzeichnet, dass die Trägerfolie beidseitig mit Leiterbahnen bedruckt ist.

3. Radnabendynamo nach einem der vorangehenden Ansprüche, dadurch gekennzeichnet, dass die Permanentmagnetstäbe aussen an einem zentralen Trägerteil (9) befestigt sind, welcher axial verlaufende Ausnehmungen als Sitze für die Permanentmagnetstäbe (8) hat.

4. Radnabendynamo nach einem der vorangehenden Ansprüche, dadurch gekennzeichnet, dass die Permanentmagnetstäbe (8) in der Radialrichtung magnetisiert sind, so dass ihre inneren bzw. äusseren Enden abwechselnd Nord- bzw. Südpole bilden.

5. Radnabendynamo nach einem der vorangehenden Ansprüche, dadurch gekennzeichnet, dass die Permanentmagnetanordnung (7) eine Anzahl zwischen 6 und 10 Permanentmagnetstäben (8) aufweist.

6. Radnabendynamo nach einem der vorangehenden Ansprüche, dadurch gekennzeichnet, dass die Traghülse (6) als Blechpaket ausgebildet ist.

7. Radnabendynamo nach Anspruch 6, dadurch gekennzeichnet, dass das Blechpaket der Traghülse (6) aus Blechringen mit jeweils dazwischen liegenden Isolationslagen gebildet ist.

8. Radnabendynamo nach einem der Ansprüche 6 oder 7, dadurch gekennzeichnet, dass die Spule (5) über eine Isolationsschicht in wärmeleitendem Kontakt mit der Traghülse (6) steht.

9. Radnabendynamo nach einem der vorangehenden Ansprüche, dadurch gekennzeichnet, dass die Permanentmagnetanordnung als Magnetrotor (7) drehbar innerhalb der Spulenanordnung (5, 6) auf der Radachse (1) gelagert ist.

10. Radnabendynamo nach einem der vorangehenden Ansprüche, dadurch gekennzeichnet, dass der Magnetrotor (7) über ein Uebersetzungsgetriebe (12) mit dem Nabenkörper (3) antriebsverbunden ist.

11. Radnabendynamo nach Anspruch 10, dadurch gekennzeichnet, dass eine von aussen durch die Radachse hindurch betätigbare Kupplung (13, 14, 15) zum Kuppeln bzw. Lösen der Antriebsverbindung zwischen dem Magnetrotor (7) und dem Nabenkörper (3) vorgesehen ist.

12. Radnabendynamo nach einem der vorangehenden Ansprüche, dadurch gekennzeichnet, dass die Spulenanordnung (5, 6) drehfest auf der Radachse (1) angeordnet ist, und die Anschlussleitungen (17) durch die Radachse (1) nach aussen geführt werden.

13. Radnabendynamo nach einem der vorangehenden Ansprüche, dadurch gekennzeichnet, dass innerhalb des Nabenkörpers Schaltelemente zur Begrenzung der Ausgangsspannung, insbesondere eine Ausgangsspannungsregelung oder eine Drosselanordnung, vorgesehen sind.

## Claims

1. Dynamo for a wheel hub in a hub body (3), which hub body is rotatably mounted on a wheel axle (1), with a central arrangement (7) of permanent magnets and a coil assembly (5, 6) coaxially surrounding the assembly of permanent magnets, which are rotatable relatively to each other, whereby the assembly (7) of permanent magnets comprises a plurality of axially aligned permanent magnetic rods (8) arranged in a star shape, and wherein the coil assembly possesses a tube-shaped coil (5) which is arranged as a printed circuit on a support foil, which support foil is windable into a tube, and inserted into a support tube (6) of a magnetizable material, which acts as a return path, characterized in that the printed circuit comprises several, parallel extending printed leads (2, 1; 2', 1') which run meandering in a geometry corresponding to the geometry of the assembly (7) of permanent magnets, which extend substantially over the whole length of the support foil, and which are thus connected at their ends that they are in series to each other.

2. Dynamo for a wheel hub according to claim 1, characterized in that the support foil has printed leads on both sides.

3. Dynamo for a wheel hub according to one of the preceding claims, characterized in that the permanent magnetic rods are attached to the outside of a central support member (9), which has axially extending recesses as seats for the permanent magnetic rods (8).

4. Dynamo for a wheel hub according to one of the preceding claims, characterized in that the permanent magnetic rods (8) are magnetized in radial direction such that their inner and outer ends, respectively, alternatively form north and south poles, respectively.

5. Dynamo for a wheel hub according to one of the preceding claims, characterized in that the assembly (7) of permanent magnets comprises a number between six and ten of permanent magnetic rods (8).

6. Dynamo for a wheel hub according to one of the preceding claims, characterized in that the support tube (6) is designed as a metal sheet pack.

7. Dynamo for a wheel hub according to claim 6, characterized in that the metal sheet pack of the support tube (6) is formed by metal sheet rings with interposed isolation layers.

8. Dynamo for a wheel hub according to one of the claims 6 or 7, characterized in that the coil (5) is in thermally conducting contact with the support tube (6) via an isolating layer.

9. Dynamo for a wheel hub according to one of the preceding claims, characterized in that the assembly of permanent magnets is rotatably supported as a magnetic rotor (7) within the coil assembly (5, 6) on the wheel axle (1).

10. Dynamo for a wheel hub according to one of the preceding claims, characterized in that the magnetic rotor (7) is connected for being driven via a transmission gearing (12) with the hub body (3).

11. Dynamo for a wheel hub according to claim 10, characterized in that a clutch (13, 14, 15) operatable from outside through the wheel axle is provided for coupling and releasing, respectively, of the driving connection between the magnetic rotor (7) and the hub body (3).

12. Dynamo for a wheel hub according to one of the preceding claims, characterized in that the coil assembly (5, 6) is non-rotatably mounted on the wheel axle (1) and the terminal leads (17) are led through the wheel axle (1) to the outside.

13. Dynamo for a wheel hub according to one of the preceding claims, characterized in that circuit elements are provided within the hub body for limiting the output voltage, especially an output voltage regulation or a reaction coil arrangement.

## Revendications

1. Dynamo de moyeu, située dans un carter de moyeu rotatif (3) agencé sur l'axe (1) d'une roue, avec un ensemble central (7) d'aimants permanents entouré par un groupe de bobines (5, 6), l'ensemble et le groupe pouvant tourner l'un par rapport à l'autre, l'ensemble (7) comportant plusieurs aimants permanents en forme de barres (8) disposées en étoile et orientées axialement, le groupe de bobines comportant une bobine (5) en forme de coque réalisée sous forme d'un circuit imprimé sur une feuille-support pouvant être enroulée et introduite dans un boîtier porteur (6) réalisé en un matériau magnétisable et faisant office d'anneau de retour du champ magnétique, caractérisée en ce que le circuit imprimé présente plusieurs lignes conductrices parallèles (21, 21') formant des méandres correspondants à la disposition géométrique de l'ensemble (7), ces lignes s'étendant essentiellement sur toute la longueur de la feuille-support et étant reliées à leurs extrémités de manière à être connectées en série.

2. Dynamo de moyeu selon la revendication 1, caractérisée en ce que la feuille-support porte des lignes conductrices imprimées sur ses deux faces.

3. Dynamo de moyeu selon une des revendications précédentes, caractérisée en ce que les aimants permanents en forme de barres sont fixés sur l'extérieur d'un support central (9) présentant des cavités orientées axialement pour recevoir lesdits aimants permanents (8).

4. Dynamo de moyeu selon une des revendications précédentes, caractérisée en ce que les aimants en forme de barres (8) sont magnétisés en direction radiale de manière à ce que leurs extrémités extérieures, respectivement intérieures, forment alternativement des pôles nord et sud.

5. Dynamo de moyeu selon une des revendications précédentes, caractérisée en ce que l'ensemble (7) comporte entre 6 et 10 aimants permanents (8) en forme de barres.

6. Dynamo de moyeu selon une des revendications précédentes, caractérisée en ce que le boîtier (6) est réalisé sous forme d'un empilement de tôles.

7. Dynamo de moyeu selon la revendication 6, caractérisée en ce que la pile de tôles du boîtier (6) est composée d'anneaux de tôle entre lesquels sont intercalées des couches isolantes.

8. Dynamo de moyeu selon une des revendications 6 ou 7, caractérisée en ce que la bobine (5) est en contact thermique avec le boîtier (6) par l'intermédiaire d'une couche isolante.

9. Dynamo de moyeu selon une des revendications précédentes, caractérisée en ce que l'ensemble d'aimants permanents forme un rotor magnétique (7) monté sur l'axe de roue (1) de manière à pouvoir tourner à l'intérieur du groupe de bobines (5, 6).

10. Dynamo de moyeu selon une des revendications précédentes, caractérisée en ce que le rotor magnétique (7) est en liaison d'entraînement avec le carter rotatif (3) par l'intermédiaire d'une transmission démultiplicatrice (12).

11. Dynamo de moyeu selon la revendication 10, caractérisée en ce qu'elle comporte un embrayage (13, 14, 15) pouvant être actionné à partir de l'extérieur et à travers l'axe de la roue pour engager et libérer la liaison d'entraînement entre le rotor magnétique (7) et le carter rotatif (3).

12. Dynamo de moyeu selon une des revendications précédentes, caractérisée en ce que le groupe de bobines (5, 6) est solidaire en rotation avec l'axe de roue (1), et que les conducteurs de connexion (17) s'étendent vers l'extérieur à travers l'axe de roue (1).

13. Dynamo de moyeu selon une des revendications précédentes, caractérisée en ce que des éléments de circuit électriques pour la limitation de la tension de sortie et comportant en particulier une régulation de la tension de sortie ou un dispositif à induction sont prévus à l'intérieur du carter rotatif.
